(19) Europäisches Patentamt
European Patent Office
Office européen des brevets

(11) Numéro de publication: **0 081 444**
**B1**

(12) **FASCICULE DE BREVET EUROPEEN**

(45) Date de publication du fascicule du brevet: **19.06.85**

(21) Numéro de dépôt: **82420172.7**

(22) Date de dépôt: **06.12.82**

(51) Int. Cl.[4]: **C 08 G 77/26**, C 08 G 77/38, C 08 L 83/04, C 09 D 3/82

(54) **Procédé de réticulation de compositions organopolysiloxaniques ne comportant pas de liaisons Si-H et de radicaux organiques à insaturation éthylénique activée.**

(30) Priorité: **09.12.81 FR 8123134**

(43) Date de publication de la demande:
**15.06.83 Bulletin 83/24**

(45) Mention de la délivrance du brevet:
**19.06.85 Bulletin 85/25**

(84) Etats contractants désignés:
**BE CH DE FR GB IT LI NL SE**

(56) Documents cités:
**DE - A - 3 006 167**
**US - A - 4 267 297**

(73) Titulaire: **RHONE-POULENC SPECIALITES CHIMIQUES, "Les Miroirs" 18, Avenue d'Alsace, F-92400 Courbevoie (FR)**

(72) Inventeur: **Pigeon, Raymond, 52, Chemin Moulin du Got, F-69340 Francheville (FR)**

(74) Mandataire: **Chichery, Guy et al, RHONE-POULENC RECHERCHES Service Brevets Chimie et Polymères Centre de Recherches de Saint-Fons B.P. 62, F-69192 St-Fons Cédex (FR)**

**EP 0 081 444 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention concerne un procédé de réticulation de compositions organopolysiloxaniques liquides obtenues à partir de polysiloxane à groupements hydroxysilylés ne comportant pas de liaisons Si—H et de radicaux organiques à insaturation éthylénique activée, et d'aminopolyalkoxysilane. Selon l'invention le procédé de réticulation est effctué par simple exposition des compositions à des radiations ultra-violettes. Le procédé permet notamment d'obtenir selon le choix des divers constituants de la composition de bons revêtements antiadhérents sur des matériaux cellulosiques ainsi que des revêtements protecteurs utilisables par exemple pour enrober des circuits imprimés.

On connait déjà de nombreux procédés de durcissement de compositions organopolysiloxaniques obtenues à partir de polysiloxane à groupements hydroxysilylés et d'aminopolyalkoxysilane et/ou de polyalkoxysilane.

Ces procédés peuvent être effectués par mise en oeuvre de catalyseurs assurant une réticulation rapide par exposition à l'humidité éventuellement après chauffage à des températures modérées; les catalyseurs sont en général choisis parmi les amines, les composés organo-étain, les titanates d'alkyle, les carboxylates ou les chélates de titane.

On peut également procéder à la réticulation de la composition par exposition de cette dernière en couche mince à diverses radiations. On sait en particulier que l'on peut effectuer la photoréticulation de certaines compositions organopolysiloxaniques obtenues à partir d'organopolysiloxane à groupements hydroxysilylés et d'aminopolyalkoxysilane proteur de groupements insaturés activés (acryloloxy, méthacroyloxy). Les groupements activés sont ceux qui se polyadditionnent sous l'effet de radiations ultra-violettes; des radicaux alkényle ou cycloalkényle tels que les groupements vinyle, allyle, cyclohexényle ne se photopolymérisent pas et ne sont donc pas évidemment considérés comme des readicaux d'insaturation éthylénique activée. Des compositions photoréticulables telles que précédemment décrites sont par exemple divulguées par les brevets japonais J5 4038-393 et J5 4063-200.

On sait également que l'on peut réticuler à l'aide de radiations UV des compositions organopolysiloxaniques ne comportant pas de groupements hydroxysilylés mais contenant des groupements insaturés activés [brevet français 2 295 959] ou ayant encore des groupements Si-alkényle et des groupements Si—H (brevet français 2 245 729).

La technique de photoréticulation est par sa simplicité même particulièrement intéressante dans l'industrie. Mais cette méthode qui permet d'introduire aisément par exemple un revêtement antiadhérent très mince sur une feuille de papier, ou encore und revêtement protecteur sur des circuits imprimés est cependant actuellement limitée à l'usage de certaines compositions organopolysiloxaniques telles que précédemment définies et contenant des groupements organiques à isaturation éthylénique en général activées et éventuellement des liaisons Si—H et/ou des groupements hydroxysilylés.

Il apparaissait donc important d'étendre le domaine de la photoréticulation en déterminant de nouvelles gammes de compositions organopolysiloxaniques obtenues à partir de polysiloxane à groupements hydroxysilylés et susceptibles d'être photoréticulées. La présente invention répond précisément à ce but.

Il a été maintenant trouvé et c'est ce qui constitue un objet de la présente invention un procédé de durcissement de compositions organopolysiloxaniques, celles-ci étant obtenues selon un procédé qui consiste essentiellement à mélanger un polysiloxane à groupements hydroxysilylés ne comportant pas de liaisons Si—H et pas de radicaux organiques à insaturation éthylénique activée avec un composé à groupement aminopolyalkoxysilylé caractérisé en ce que le durcissement de la composition organopolysiloxanique est effectué par exposition en couches minces à des radiations ultraviolettes.

La découverte de la possibilité de photoréticuler les compositions organopolysiloxaniques ne renfermant pas de liaison Si—H et de groupements organiques à insaturation éthylénique activée est totalement inattendue au vu de l'art antérieur pertinent.

Tout polysiloxane connu ou que l'on peut obtenir selon tout procédé connu et qui ne contient pas de liaisons Si—H et de radicaux organiques à insaturation éthylénique activée est utilisable dans le cadre de la présente invention. Il peut s'agir de polydiorganopolysiloxane $\alpha,\omega$-dihydroxylés constitués de motifs de formule ($Z_2SiO$) dans laquelle les symboles Z identiques ou différents représentent:

- des radicaux hydrocarbonés aliphatiques ou cycloaliphatiques saturés ayant de 1 à 6 atomes de carbone et comportant éventuellement de 1 à 6 atomes de chlore et/ou de fluor,
- des radicaux alcényles ayant de 2 à 4 atomes de carbone et représentant en nombre au plus 5% de l'ensemble des radicaux hydrocarbonés protés par l'organopolysiloxane,
- des radicaux phényle, alcoylphényle, ou phénylalcoyle ayant de 6 à 8 atomes de carbone et éventuellement substitués par un à 4 atomes de chlore et/ou de fluor.

A titre illustratif on peut citer parmi les radicaux Z les groupements: méthyle; éthyle; propyle; isopropyle; butyle; isobutyle; $\alpha$-pentyle; t-butyle; chlorométhyle; dichlorométhyle; $\alpha$-chloroéthyle; $\alpha,\beta$-dichloroéthyle; fluorométhyle; difluorométhyle; $\alpha$-$\beta$-difluoroéthyle; trifluoro-3,3,3 propyle; trifluoro cyclopropyle; trifluoro-4,4,4 butyle; heptafluoro-3,3,3,4,4,5,5 pentyle; vinyle; allyle; phényle; p-chlorophényle; m-chlorophényle; dichloro-3,5 phényle; trichlorophényle; tétrachlorophényle; o-, p-, ou m tolyle; $\alpha,\alpha,\alpha$ trifluorotolyle; xylyles comme diméthyl-2,3 phényle; diméthyl-3,4 phényle.

Préférentiellement les radicaux organiques Z sont des radicaux méthyle, phényle, vinyle, ces radicaux pouvant être éventuellement chlorés et/ou fluorés.

On peut également utiliser dans le cadre de la présente invention, en tant que polysiloxane à groupements hydroxysilylés un mélange constitué par un (ou plusieurs) organopolysiloxanes linéaires auquel on ajoute d'autres organopolysiloxanes ramifiés ou rétivulés. Il peut s'agir dans cette catégorie de résines organopolysiloxaniques constituées de motifs en proportions quelconques, $ZSiO_{3/2}$, $SiO_2$, $((Z)_2SiO)$ et $(Z)_2(OH)SiO_{0,5}$, Z ayant la même signification que celle préalablement donnée.

En tant que composé à groupements aminopolyalkoxysilylé on peut utiliser dans le cadre de la présente invention tout composé connu. Il peut s'agir ainsi d'un aminopolyalkoxysilane ou d'un aminopolyalkoxypolysiloxane.

L'aminopolyalkoxysilane peut être représenté par la formule générale:

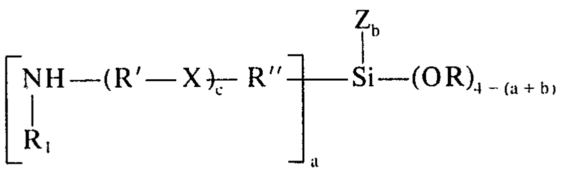
(I)

L'aminopolyalkoxypolysiloxane peut être représenté par son motif récurrent de formule:

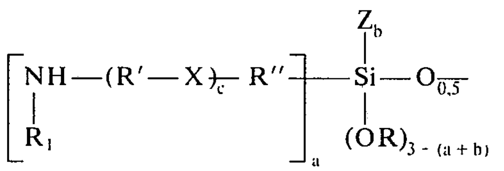
(II)

Dans ces formules les divers symboles représentent resprectivement:

— a un nombre entier égal à 1 ou 2,
— b un nombre entier égal à 0, 1, la somme (a + b) étant au plus égal à 2,
— c un nombre entier égal à 0 ou 1,
— X un atome d'oxygène ou un groupement

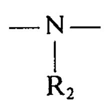

$R_2$ représentant un radical défini plus loin,

— $R_1$ un atome d'hydrogène ou un groupement alkyle ayant de 1 à 4 atomes de carbone,
— R' et R'' des radicaux divalents alkylène ayant de 1 à 6 atomes de carbone,
— $R_2$ un atome d'hydrogène ou un radical alkyle ayant de 1 à 4 atomes de carbone:
— R des radicaux alkyle ayant de 1 à 4 atomes de carbone ou des radicaux alkoxyalkyle de formule: $-R'''-O-R_3$ dans laquelle $R_3$ représente un radical alkyle ayant de 1 à 4 atomes de carbone et où R''' représente un radical alkylène ayant de 2 à 4 atomes de carbone.

On peut évidemment dans le cadre de la présente invention utiliser un mélange de plusieurs composés à groupements aminopolyalkoxysilylés de formule (I) et/ou (II).

Enfin l'aminopolyalkoxypolysiloxane peut comporter un ou plusieurs motifs différents (II), ces motifs étant associés éventuellement à des motifs diorganosiloxy ou polydiorganosiloxy $-(Z_2SiO)_n-$, n étant un nombre entier positif.

A titre préférentiel on utilise dans le cadre de la présente invention un aminopolyalkoxysilane de formule (I) dans laquelle les divers symboles représentent respectivement:

— a un nombre entier égal à 1,
— Z un radical méthyle, phényle ou vinyle, ces divers radicaux étant éventuellement chlorés ou fluorés,
— X un radical

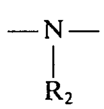

— $R_1$, $R_2$ un atome d'hydrogène,
— R' et R'' des radicaux alkylène ayant de 2 à 6 atomes de carbone,
— R''' un radical éthylène,
— R et $R_3$ des radicaux méthyle ou éthyle.

Parmi les composés à groupements aminopolyalkoxysilyés on citera à titre illustratif les composés de formule:

$$H_2N-(CH_2)_3-Si(O-CH_3)_3$$

$$H_2N-(CH_2)_3-Si(O-C_2H_5)_3$$

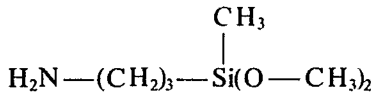

$$H_2N-(CH_2)_4-Si(O-CH_3)_3$$

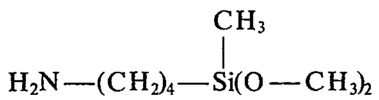

$$CH_3-NH-(CH_2)_3-Si(-O-CH_3)_3$$

$$CH_2=CH-NH-(CH_2)_3-Si(OC_2H_5)_3$$

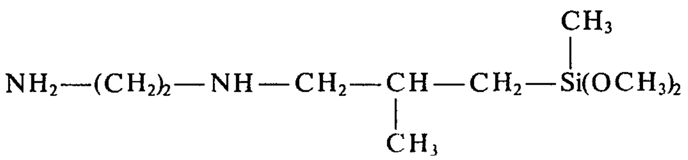

$$NH_2-(CH_2)_2-NH-(CH_2)_3-Si(OCH_3)_3$$

$$NH_2-(CH_2)_3-O-(CH_2)_3-Si(OC_2H_5)_3$$

$$NH_2-(CH_2)_3-O-(CH_2)_3-Si(C_6H_5)(OC_2H_5)_2$$

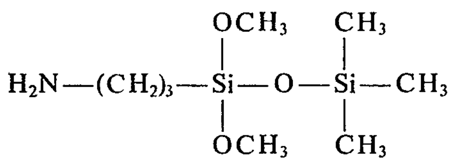

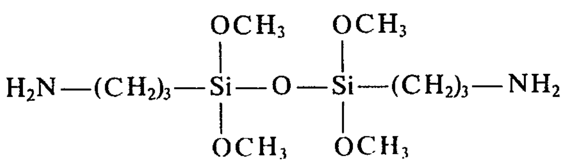

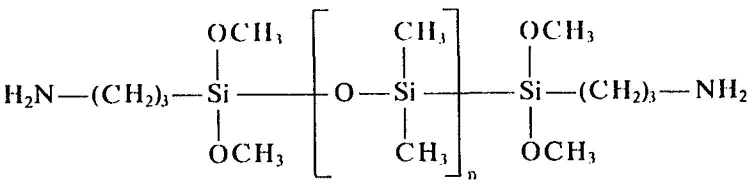

où n est un nombre entier positif.

Le polysiloxane à groupements hydroxysilylés et le composé à groupements aminopolyalkoxysilylés servant à préparer la composition organopolysiloxanique photoréticulable peuvent être utilisés en proportions quelconques. Ces composés seront choisis de manière à assurer à la composition avant

durcissement une viscosité comprise entre 20 et 20 000 mPa · s et préférentiellement entre 50 et 3000 mPa · s. Pour y parvenir le rapport entre le nombre de groupements hydroxyles liés à un atome de silicium et le nombre de groupements alkoxy liés aux atomes de silicium est inférieur ou égal à 1, préférentiellement compris entre 0,1 et 1 et avantageusement compris entre 0,1 et 0,9. De telles compositions sont stables au stockage en l'absence d'humidité et photoréticulent rapidement et complètement.

Les compositions organopolysiloxaniques photoréticulables selon le procédé de l'invention peuvent être obtenues par simple mélange du polysiloxane à groupements hydroxysilylés et du composé à groupements aminopolyalkoxysilylés avec avancement ou non avant photoréticulation, de la réaction de condensation entre les groupements Si—OH et Si—(OR); la réaction d'avancement sera évidemment effectué en l'absence d'humidité et selon toute technique connue de condensation entre un organopolysiloxane à groupements hydroxysilylés et un composé à groupements polyalkoxysilylés.

On peut donc dans le cadre de la présente invention préparer et utiliser de simples mélanges ou des précondensats. Avantageusement on prépare et utilise des précondensats puisque ceux-ci ont une bien meilleure stabilité au stockage.

On peut ainsi éventuellement effectuer un simple mélange à froid de l'organopolysiloxane et du composé à groupements aminopolyalkoxysilylés sans éliminer les composés volatils résultant de la réaction de condensation. On peut chauffer le mélange à une température en général comprise entre 20 et 160°C de manière à éliminer les composés volatils formés; bien entendu cette élimination peut être effectuée sous pression réduite. On peut également préparer le précondensat en adjoignant des catalyseurs ou des mélanges de catalyseurs de condensation connus à cet effet tels que les titanates d'alkyle, les carboxylates de titane ou les complexes. L'utilisation de dérivés aminés ou d'organoétain peut éventuellement être envisagée mais ce sont les dérivés du titane qui constituent les catalyseurs préférés.

Si les catalyseurs sont utilisés, ceux-ci sont introduits de telle manière qu'ils représentent pondéralement de 0,01 à 1% de la masse globale, composé à groupements hydroxysilylés et composé à groupements aminopolyalkoxysilylés.

Selon une autre variante on peut également préparer un précondensat comprenant un net excès de groupements alkoxy, puis ajouter avant emploi un organopolysiloxane à groupements hydroxysilylés de manière à ce que le rapport global groupement OH/groupement alkoxy corresponde à ce qui a été indiqué précédemment.

La photoréticulation est effectuée par exposition des compositions sous forme de cuches minces à des radiations ultra-violettes fournies par des lampes à xénon ou à arc à mercure dont le spectre d'émission s'étend de 250 nm à 450 nm. Le temps d'exposition est variable. Il peut être compris entre une fraction de seconde et quelques secondes et s'étendre jusqu'à une centaine de secondes. On opère en général à l'air ambiant ou éventuellement avec un air renfermant une teneur en himidité relative comprise entre 20 et 80%.

Selon une variante préférentielle, on introduit des photosensibilisateurs dans la composition à photoréticuler. On peut ainsi utiliser tout compsé connu doué de propriétés photosensibilisatrices tels que les dérivés de la benzophénone, de l'acétophénone, de la benzoïne, de la xanthone et de la thioxanthone.

A titre d'exemples de photosensibilisatuers on peut citer: les éthers propylique, isopropylique, butylique, isobutylique de la benzoïne; la chloro-3 xanthone, la méthoxy-3 xanthone, la chloro-2 thioxanthone, l'acétophénone, la benzophénone.

La quantité de photosensibilisatuer est d'ordinaire comprise entre 0,01 et 20% par rapport à la masse globale de la composition obtenue à partir de polysiloxane à groupements hydroxysilylés et du composé à groupements aminopolyalkoxysilylés.

Cette quantité de photosensibilisatuers est préférentiellement comprise entre 0,1 et 5%.

Selon une autre variante de la présente invention on peut associer aux composés porteurs de groupements aminopolyalkoxysilylé divers composés à groupements polyalkoxysilylés et porteurs éventuellement d'autres groupements fonctionnels. On mentionnera dans ce contexte les composés polyalkoxysilylés monomères ou polymères ou encore les époxypolyalkoxysilanes.

Les composés monomères à groupements polyalkoxysilylés ont pour formule:

$$Z_{b'}\ Si(OR)_{4-b'}$$

dans laquelle b' représente un nombre entier nul ou égal à 1 ou 2 et où les symboles Z et R ont l'une des significations préalablement données. Parmi ces composés on peut citer à titre illustratif les composés de formule:

$Si(OCH_2CH_2OCH_3)_4$,
$Si[OCH_2CH_2CH_2OC_2H_5)_4$,
$Si(OCH_2CH_2OCH_2CH_2OCH_3)_4$,
$CH_3Si(OCH_2CH_2OCH_3)_3$,
$CH_3Si(OCH_2CH_2OCH_2CH_2OCH_3)_3$,

$CH_3Si(OCH_2CH_2OC_2H_5)_3$,
$C_2H_5Si(OCH_2CH_2OCH_3)_3$,
$(nC_3H_7)Si(OCH_2CH_2OCH_3)_3$,
$CH_2 = CHSi(OCH_2CH_2OCH_3)_3$,
$CH_2 = CHSi(OCH_2CH_2OC_2H_5)_3$,
$CH_2 = CHSi(OCH_2CH_2OCH_2CH_2OCH_3)_3$,
$C_6H_5Si(OCH_2CH_2OCH_3)_3$.

De préférence, sont introduits dans les compositions photoréticulables selon l'invention, seuls ou en mélanges, les réticulants de formule:

$Si(OCH_2CH_2OCH_3)_4$,
$CH_3Si(OCH_2CH_2OCH_3)_3$,
$CH_2 = CHSi(OCH_2CH_2OCH_3)_3$,
$C_6H_5Si(OCH_2CH_2OCH_3)_3$.

Les composés à groupements polyalkoxysilyés peuvent être des composés disiloxaniques ou polymériques (silicates, polysilicates, polyalkoxapolysiloxanes) résultant de l'hydrolyse partielle de monomères de formule $Si-(OR)_4$, et/ou $ZSi\ (OR)_3$.

On peut évidemment associer à ces divers monomères durant l'hydrolyse des composés difonctionnels tels que $Z_2Si(OR)_2$; on peut en outre utiliser dans le cadre de la présente invention un mélange de composés à groupements polyalkoxysilylés du type monomère ou polymère.

Parmi les composés polyalkoxysilylés du type monomère on citera à titre illustratif:

le silicate de méthyle,
le silicate d'éthyle,
le silicate de propyle,
le silicate d'isopropyle,
le silicate de butyle,
le silicate de $\beta$-méthoxyéthyle,
le silicate de $\beta$-éthoxyéthyle,
les silicates mixtes de méthyle et d'éthyle,
les silicates mixtes de méthyle et de butyle.

Selon une autre variante de la présente invention on peut introduire en même temps que le composé à groupement aminopolyalkoxysilylé un époxypolyalkoxysilane ayant l'une des formule générales suivantes:

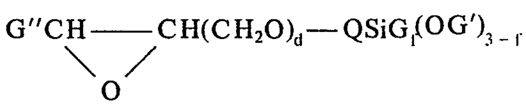 et

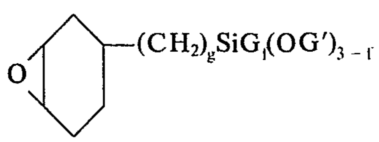

dans lesquelles le symbole G représente un groupe alcoyle ayant de 1 à 4 atomes de carbone, le groupe phényle; le symbole G' représente un groupe alcoyle ayant de 1 à 3 atomes de carbone, le groupe méthoxyéthyle, le symbole G'' représente un atome d'hydrogène, un groupe alcoyle ayant de 1 à 3 atomes de carbone; le symbole Q représente un radical alcoylène ayant de 1 à 10 atomes de carbone; le symbole f représente 0 ou 1; le symbole g représente 0 ou 2; le symbole d représente 0 ou 1.

A titre illustratif de radicaux alcoyles ayant de 1 à 3 atomes de carbone représentés par G' et G'' peuvent être cités: les radicaux méthyle, ethyle, n-propyle, isopropyle.

A titre illustratif de radicaux alcoylènes ayant de 1 à 10 atomes de carbone représentés par Q, peuvent être cités: ceux de formules

$—CH_2—$

$—(CH_2)_2—$

$—(CH_2)_3—$

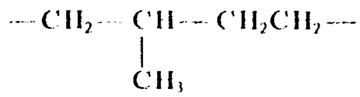

$—(CH_2)_5—$

$—(CH_2)_8—$

Plus spécifiquement, ces époxysilanes peuvent répondre aux fomules ci-après qui montrent comment peuvent être associées les différentes significations de G, G′, G″, Q, d, f, g

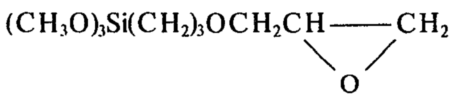

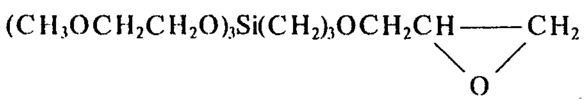

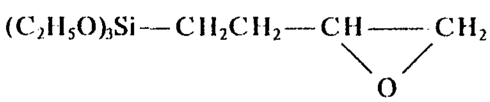

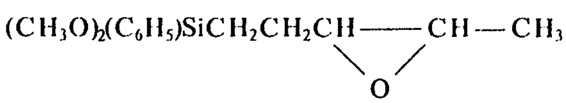

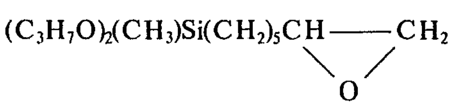

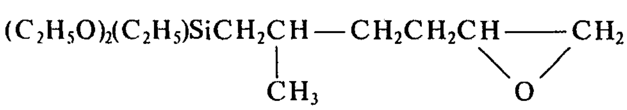

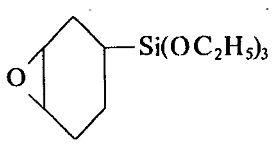

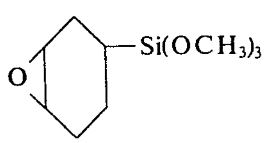

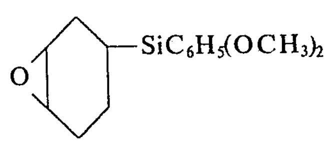

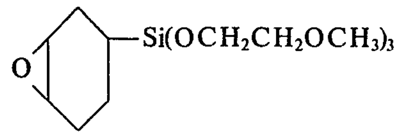

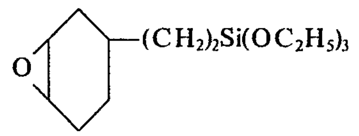

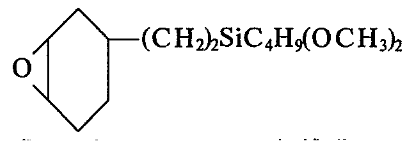

Les modes de préparation et les caractéristiques de ces époxysilanes sont décrits dans la littérature chimique et plus spécialement dans les brevets français 1 185 009, 1 526 291, 1 548 971.

On choisira préférentiellement les époxysilanes ayant des groupes glycidoxypropyles liés aux atomes de silicium (ils répondent par exemple aux deux premières formules développées écrites ci-dessus), du fait qu'ils sont accessibles industriellement ou aisés à préparer.

Les proportions realtives entre le composé à groupements aminopolyalkoxysilylés et le composé à groupements polyalkoxysilylés et/ou l'époxysilane peuvent être très variées. Habituellement le composé à groupement aminopolyalkoxysilylé représente de 1 à 20% et préférentiellement de 1 à 5% de cet ensemble.

Les compositions photoréticulables utilisables selon l'invention peuvent être mises en oeuvre dans de nombreux domaines. Elles peuvent servir pour déposer des revêtements anti-adhérents sur des matériaux divers tels que les matériaux métalliques, synthétiques ou cellulosiques (papier kraft dont le degré de raffinage peut être quelconque, papier cristal, papiers sulfurisés, carton). Pour une telle application les radicaux Z sont exclusivement des radicaux méthyle, 3% d'entre eux pouvant être des radicaux vinyle. On peut également utiliser les compositions photoréticulables pour l'obtention de vernis protecteur pour l'industrie électronique. Dans cette situation les polysiloxanes comportent en tant que groupement hydrocarbonés relié aux atomes de silicium simultanément des groupements alcoyle et des groupements aryle. Dans ce contexte on peut citer les $\alpha,\omega$-dihydroxy diorganopolysiloxanes constitués de motifs diméthylsiloxy, méthylphénylsiloxy et éventuellement diphénylsiloxy.

Enfin il est également possible d'introduire dans les compositions photoréticulables selon l'invention d'autres ingrédients non encore mentionnés tels que des charges minérales ou organiques; des pigments, des agents antistructures, des stabilisants thermique ou UV, des agents thixotropiques, des inhibiteurs de corrosion.

Les charges minérales sont, de manière courante, des silices de combustion ou des silices de précipitation dont les caractéristiques physicochimiques sont fonction de l'utilisation envisagée. Les diverses silices auront subi éventuellement un traitement de modification de leurs propriétés de surface, en les rendant en particulier hydrophobes; la nature des divers agents destinés à modifier les propriétés de surface n'est pas critique. Les agents utilisés sont généralement de nature organosilicique tels que les silazanes (l'hexaméthyldisilazane), les alcoylsilanes (triméthylsilane), les alcoylalkoxysilanes (triméthyléthoxysilane), les alcoylchlorosilanes, les alkénylchlorsilanes, les organopolysiloxanes $\alpha,\omega$-dihydroxylés, les cyclosiloxanes et sont par exemple décrits dans les brevets français 2 356 596 et 2 395 952.

En outre, en plus de la silice traitée, les compositons peuvent contenir d'autres charges, telles que du quartz pulvérisé, de la terre de diatomée, du talc ou du noir de carbone.

Parmi les charges organiques utilisables, on citera la poudre de liège, la sciure de bois, les fibres synthétiques, les fibres d'amiante, les fibres cellulosiques.

La quantité globale de charge est évidemment fonction de l'application envisagée. C'est ainsi que pour les compositions utilisées pour la préparation de revêtements, on incorpore, en général, de 5 à 50% et de préférence de 10 à 40% de silice de combustion ou de précipitation.

Le procédé selon l'invention est particulièrement intéressant sur le plan industriel: il permet de réticuler très simplement par simple exposition aux radiations UV des couches minces issues des compositions organopolysiloxaniques telles que précédemment définies.

En particulier dans le cas du papier on obtient d'excellents revêtements anti-adhérents, vis-à-vis des substances collantes visqueuses, pâteuses du libérant de l'humidité. Les papiers ainsi traités peuvent être utilisés comme intercalaires, supports séparateurs pour transferts et pour étiquettes, emballages de matières alimentaires ou de produits industriels collants.

On peut également effectuer l'irradiation ultraviolette des compositions de l'invention déposées en couches minces, en opérant dans une atmosphère gazeuse constituee partiellement ou en totalité par

de l'oxygène (le complément étant réalisé par un gaz inerte) et éventuellement en présence de vapeur d'eau, l'humidité raltive étant alors comprise entre 5% et 95% et préférentiellement entre 20% et 80%.

Les exemples qui suivent illustrent l'invention

Exemple 1

On mélange sous agitation, à température ambiante:

— 5 g de $\gamma$-aminopropyltriméthoxysilane,
— 136,1 g d'huile polydiméthylsiloxane $\alpha,\omega$-dihydroxylée (0,94% OH — Viscosité Brookfield à 20°C 110 mPa · s)

Le rapport foncitonnel $OH/OCH_3$ est de 0,9. On laisse en contact sous agitation 6 heures à 20°C en flacon fermé. La viscosité atteint 350 mPa · s.

Sur une partie du mélange, on ajoute selon les essais:

— 0,2% de titanate de tétraisopropyle (TIPT) au début du mélange, [(isopropyl-O)$_4$ Ti]
— 4% de photoinitiateur: Trigonal®14 de UCB (mélange d'éthers de la benzoïne), avant essai de photoréticulation.

Cette formulation est appliquée manuellement sur papier kraft qualité 9530 de Sibille, épaisseur de dépôt environ 2 µm. On la soumet au rayonnement d'une lampe à vapeur de mercure, type HOK 6 de Philips équipée d'un miroir elliptique, à une distance de 5,6 cm, l'échantillon étant au 2ème foyer de l'ellipse. La réticulation est appréciée par l'absence de toucher gras ou »smear«.

On contrôle ensuite l'antiadhérence du papier selon des tests couramment utilisés par l'homme de l'art:

— test au ruban adhésif Barnier 1100
— test de transfert d'adhésif Soluron A 1030 E.

Les résultats observés sont rassemblés ci-après:

| Formulation | Durée exposition UV sec | Force de décollement (g/cm) Test Barnier | Test Soluron |
|---|---|---|---|
| Sans TIPT — 4% Trigonal 14 | 0,6 | 28 | |
| 0,2% TIPT sans Trigonal 14 | 2 | 27,1 | |
| 0,2% TIPT — 4% Trigonal 14 | 0,4 | 19,4 | 2,5 |

Exemple 2

Dans un réacteur de 6 litres équipé d'une agitation, d'une tête de colonne, d'un bulle à bulle d'azote et d'un bain d'huile on charge successivement:

— 3300 g d'huile polydiméthylpolysiloxanique à 0,72% d'OH et de viscosité Brookfield à 20°C de 120 mPa · s
— 92,8 g de $\gamma$-aminopropyltriméthoxysilane
— 6,78 g de titanate de tétraisopropyle.

Le rapport fonctionnel $OH/OCH_3$ est de 0,9.

On chauffe de 20 à 120°C en 50 minutes, puis refroidit.

On récupère 7,21 g de léger correspondant à 16% du méthanol théorique.

On obtient un condensat homogène de viscosité Brookfield à 20°C 310 mPa · s.

Après addition de 4% Trigonal ® 14 on réalise 2 essais de photoréticulation sur papier Kraft Sibille 9530:

— dépôt manuel épaisseur 2 µm, et réticulation comme dans l'exemple 1.

Le dépôt est réticulé après 0,6 seconde d'exposition.

— dépôt sur machine d'enduction équipée d'une tête type hélio-glissant, à la vitesse de 10 m/min, suivi d'un passage sous 3 lampes Philips HOK6 équipées de miroirs paraboliques.

Taux de dépôt: 0,7 g/m$^2$.
Durée d'exposition dans le champ du rayonnement UV: 1,5 seconde.
Le dépôt est parfaitement réticulé comme le montre l'absence de »smear«.

Antiadhérence:

| | |
|---|---|
| test Barnier 1100 | 30 g/cm |
| test Soluron | 1,5 g/cm |

Exemple 3

Dans un réacteur de 1 litre on charge:

— 800 g d'huile polydiméthylpolysiloxanique à 0,72% d'OH et de viscosité Brookfield à 20° C de 120 mPa · s
— 28,9 g de $\gamma$-aminopropyltriméthoxysilane
— 1,65 g de titanate de tétraisopropyle

Le rapport OH/$OCH_3$ est de 0,7.
On chauffe de 20 à 118° C en 35 minutes au bain d'huile puis refroidit.
On récupère: 3,55 g de léger correspondant à 32,5% du méthanol théorique.
Viscosité Brookfield à 20° C du condensat: 580 mPa · s.
Examiné comme dans l'exemple 1, après addition de photoinitiateur, ce condensat est réticulé en 0,4 seconde.

Exemple 4

Dans un réacteur de 1 litre on charge:

— 800 g d'huile polydiméthylpolysiloxanique à 0,72% d'OH et de viscosité Brookfield à 20° C de 120 mPa · s
— 20,25 g de $\gamma$-aminopropyltriméthoxysilane
— 1,64 g de titanate de tétraisopropyle

Le rapport fonctionnel OH/$OCH_3$ est de 1.
On chauffe de 20 à 120° C en 45 minutes au bain d'huile puis refroidit.
On récupère: 1,06 g de léger correspondant à 10% du méthanol théorique.
Viscosité Brookfield à 20° C: 320 mPa · s.
Examiné comme dans l'exemple 1, ce condensat est réticulé en 2 secondes sans photoinitiateur, 0,4 seconde après addition de 4% de Trigonal 14.

Antiadhérence:

| | |
|---|---|
| test Barnier 1100 | 22,8 g/cm |
| test Soluron | 1,2 g/cm |

Exemple 5

Dans un évaporateur rotatif de 1 litre fonctionnant sous vide partiel on charge:

— 400 g d'huile polydiméthylpolysiloxanique à 0,72% d'OH et de viscosité Brookfield à 20° C de 120 mPa · s
— 10,12 g de $\gamma$-aminopropyltriméthoxysilane
— 0,82 g de titanate de tétraisopropyle

Le rapport fonctionnel OH/$OCH_3$ est de 1.
On applique une pression de 25 mbar et on chauffe 2 heures à 30° C puis 40 minutes de 30 à 50° C.
Méthanol récupéré: 3,12 g correspondant à 57,5% de la théorie.
Viscosité Brookfield à 20° C du condensat: 220 mPa · s.
Examiné comme dans l'exemple 1, en présence de photoinitiateur, ce condensat est réticulé en 0,4 seconde.

Exemple 6

Dans un évaporateur rotatif de 1 litre on charge:

- 400 g d'huile polydiméthylpolysiloxanique à 0,72% d'OH et de viscosité Brookfield à 20° C de 120 mPa · s
- 16,87 g de $\gamma$-aminopropyltrimétoxysilane
- 0,83 g de titanate de tétraisopropyle

Le rapport fonctionnel $OH/OCH_3$ est de 0,6.

On aplique une pression de 25 mbar et on laisse réagir 30 minutes à 20° C puis on chauffe 30 minutes de 20 à 50° C.

On récupère 4,93 g de légers, correspondant après dosage CPG à 77,3% du méthanol théorique.

Viscosité Brookfield à 20° C: 1160 mPa · s.

Examiné comme dans l'exemple 1, en présence de photoinitiateur, ce condensat est photoréticulé en 0,4 seconde.

Exemple 7

Dans un évaporateur rotatif de 1 litre on charge:

- 600 g d'huile polydiméthylpolysiloxanique à 0,72% d'OH et de viscosité Brookfield à 30° C de 120 mPa · s
- 45,53 g de $\gamma$-aminoproyltriméthoxysilane
- 1,29 g de titanate de tétraisopropyle

Le rapport fonctionnel $OH/OCH_3$ est de 0,33.

On applique une pression de 25 mbar et on chauffe 1 heure de 20 à 30° C puis 30 minutes à 50° C.

On récupère 10,2 g de légers, correspondant après dosage CPG à 100% du méthanol théorique.

Viscosité Brookfield à 20° C du condensat: 150 mPa · s.

Conservé à l'abri de l'humidité et de la lumière, la viscosité est de 300 mPa · s après 3 mois.

L'analyse de ce produit par RMN donne la répartition suivante pour les atomes de silicium des bouts de chaines:

- 38% ayant la configuration:

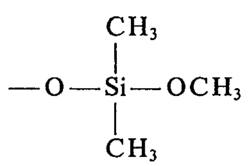

- 31% ayant la configuration:

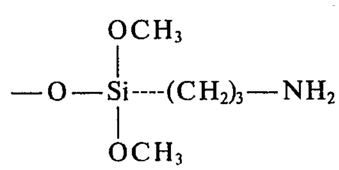

- 31% ayant la configuration:

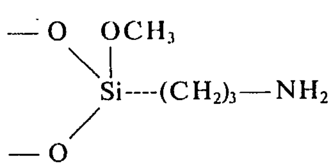

Dans un autre réacteur 100 g de ce condensat sont mélangés avec:

- 170 g de de la même huile polydiméthylpolysiloxanique que ci-dessus
- 0,34 g de titanate de tétraisopropyle

Le rapport fonctionnel $OH/OCH_3$ est de 0,9.
On laisse en contact 5 heures 30 minutes à 20° C.
La viscosité Brookfield à 20° C atteint 400 mPa · s.
Pour ces 2 condensats, en présence de photoinitiateur, la réticulation s'effectue en 0,4 seconde.

### Exemple 8

Dans un évaporateur rotatif de 1 litre on charge:

- 105 g d'huile diméthyldiphényldihydroxylée à 2,56% d'OH et de viscosité Brookfield à 20° C 97 mPa · s
- 28,34 g de $\gamma$-aminopropyltriméthoxysilane
- 0,266 g de titanate de tétraisopropyle

Le rapport fonctionnel $OH/OCH_3$ est de 0,33.
On traite 2 heures 30 minutes à 20° C sous 25 mbar et récupère 4,53 g de légers correspondant à 80% du méthanol théorique.
Viscosité Brookfield à 20° C du condensat: 120 mPa · s.
Après 3 mois, la viscosité atteint 200 mPa · s.
Examiné comme dans l'exemple 1 mais sur plaque aluminium ce condensat est photoréticulé en 1,4 s (avec photoinitiateur).
Le revêtement ainsi réticulé présente une bonne adhérence, une bonne résistance aux solvants et au froid, de bonnes propriétés électriques, une faible thermoplasticité et une grande souplesse.
Il peut servir à protéger divers matériaux et peut être mis en oeuvre dans de nombreux domaines d'application, plus particulièrement en électronique.

### Exemple 9

Dans un évaporateur rotatif on charge:

- 150 g d'huile polydiméthylpolysiloxanique à 0,72% d'OH et de viscosité Brookfield à 20° C de 120 mPa · s
- 10,37 g de $\gamma$-aminopropylméthyldiméthoxysilane
- 0,32 g de titanate de tétraisopropyle

Le rapport fonctionnel $OH/OCH_3$ est de 0,5.
On applique une pression de 25 mbar. On laisse réagir 40 minutes à 20° C puis on chauffe 10 minutes de 20 à 50° C.
Méthanol récupé: 82,7% de la théorie (après dosage CPG).

Viscosité Brookfield à 20° C du condensat:
130 mPa · s
230 mPa · s après stockage 3 mois à l'abri de l'humidité et de la lumière.

Examiné comme dans l'exemple 1, ce condensat réticule en 1,2 seconde (avec photoinitiateur).

### Exemple 10

Dans un ballon tricol de 250 $cm^3$ équipé d'une agitation centrale, d'une ampoule de coulée, relié à un ballon récepteur plongeant dans la carboglace ainsi qu'à une source de vide, on charge:

- 52,2 g de $\gamma$-aminopropyltriméthoxysilane

On coule lentement en 40 minutes dans le ballon chauffé entre 60 et 70° C et en distillant au fur et à mesure le méthanol formé sous pression réduite de 20 mbar:

- 62,5 g d'huile polydiméthylpolysiloxanique à 3,95% d'OH et de viscosité Brookfield à 30° C de 65 mPa · s.

On élimine ensuite l'excès de $\gamma$-aminopropyltriméthoxysilane en chauffant vers 70°C sous une pression de 1 mbar.

On obtient un produit jaune clair, de viscosité 800 mPa · s, stable si on le conserve à l'abri de l'humidité et à température modérée.

L'analyse de ce produit par dosage des fonctions amine et RMN montre que l'on a la structure suivante:

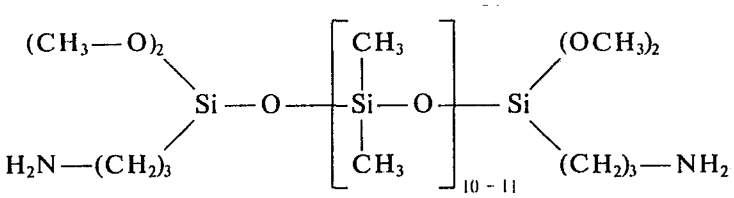

Appliqué en couche mince (2 µm) sur plaque de verre, ce produit est photoréticulé en 1,6 seconde sans photoinitiateur, 0,4 seconde avec 4% de Trigonal 14.

Exemple 11

Dans un évaporateur rotatif on charge:

- 400 g d'huile polydiméthylpolysiloxanique à 0,72% d'OH et de viscosité Brookfield 130 mPa · s
- 37,66 g de N.aminoéthyl $\gamma$-aminopropyltriméthoxysilane
- 0,87 g de titanate de tétraisopropyle

Le rapport fonctionnel $OH/OCH_3$ est de 0,33.

On applique une pression de 25 mbar. On laisse réagir 30 minutes à 20° C puis on chauffe 30 minutes de 20 à 50° C.

On récupère 5,1 g de léger correspondant à 80% du méthanol théorique.

Viscosité Brookfield à 20° C:
350 mPa · s
940 mPa · s après stockage 14 jours à l'abri de l'humidité et de la lumière.

Dans un réacteur agité, on charge:

- 10 g du condensat ci-dessus
- 16,52 g de la même huile silicone que ci-dessus
- 0,033 g de titanate de tétraisopropyle

Le rapport fonctionnel final $OH/OCH_3$ est de 0,9.

On laisse 4 heures à 20° C. La viscosité atteint 420 mPa · s.

Examiné comme dans l'exemple 1, en présence de photoinitiateur, ces 2 condensats sont réticulés en 0,6 seconde en conduisant à de bonnes propriétés d'antiadhérence.

Exemple 12

Dans un évaporateur rotatif de 1 litre on charge:

- 40,02 g de $\gamma$-glycidoxypropyltriméthoxysilane
- 30,37 g de $\gamma$-aminopropyltriméthoxysilane

On laisse réagir 10 minutes puis on rajoute:

- 400 g d'huile silicone à 0,72% d'OH et de viscosité Brookfield à 20° C de 120 mPa · s
- 0,94 g de titanate de tétraisopropyle

Le rapport fonctionnel $OH/OCH_3$ est de 0,166.

On applique une pression de 25 mbar. On laisse 30 minutes à 20° C puis on chauffe 30 minutes de 20 à 50° C.

On récupère 6,17 g de légers correspondant à 100% du méthanol théorique.

Viscosité Brookfield à 20° C: 140 mPa · s.
Examiné comme dans l'exemple 1, ce condensat réticule en 0,6 seconde.

Exemple 13

Dans un évaporateur rotatif de 1 litre on charge:

- 400 g d'huile silicone à 0,72% d'OH et de viscosité Brookfield à 20° C de 120 mPa · s
- 37,49 g de $\gamma$-aminopropyltriétoxysilane
- 0,87 g de titanate de tétraisopropyle

Le rapport fonctionnel $OH/OC_3H_5$ est de 0,33.
On applique une pression de 25 mbar. On laisse réagir 30 minutes à 20° C puis on chauffe 30 minutes de 20 à 50° C, 30 minutes de 50 à 80° C et on maintient 30 minutes à 80° C.
On récupère 7,14 g de légers correspondant à 70,5% du méthanol théorique.

Viscosité Brookfield à 20° C:
210 mPa · s
510 mPa · s après stockage 100 heures à l'abri de l'humidité et de la lumière.

Dans un autre évaporateur, on charge:
- 50 g du condensat ci-dessus
- 83,33 g de la même huile silicone que ci-dessus
- 0,167 g de titanate de tétraisopropyle

Le rapport fonctionnel final $OH/OC_2H_5$ est de 0,9.
Sous une pression de 25 mbar, on laisse réagir 30 minutes à 20° C puis on chauffe 30 minutes de 20 à 80° C.
On récupère 1,05 g de légers.
Viscosité Brookfield à 20° C: 340 mPa · s.
Examinés comme dans l'exemple 1, le 1er et le 2ème condensat sont réticulés respectivement en 2,4 et 3,2 secondes sans photoinitiateur et tous les 2 en 0,8 seconde en présence de 4% Trigonal 14.
On oberserve dans tous les cas, de bonnes propriétés d'antiadhérence.

Exemple 14

Dans un évaporateur rotatif de 500 ml on charge:

- 200 g d'huile polydiméthylpolysiloxanique à 4,53% d'OH et de viscosité Brookfield à 20° C de 60 mPa · s
- 95,55 g de titanate de tétraisopropyle

Le rapport fonctionnel $OH/OCH_3$ est de 0,33.
On applique une pression de 25 mbar et on laisse réagir 15 minutes à 20°C puis on chauffe 30 minutes de 20 à 50° C.
On récupère 16,70 g de légers correspondant après dosage CPG à 93,9% du méthanol théorique.
Viscosité Brookfield à 20° C de 34 mPa · s.
Dans un réacteur agité on charge:

- 25 g du condensat ci-dessus
- 201,4 g d'huile polydiméthylpolysiloxanique à 0,72% d'OH et de viscosité Brookfield à 20° C de 120 mPa · s
- 0,40 g de titanate de tétraisopropyle

Le rapport fonctionnel final $OH/OCH_3$ est de 0,9.
On laisse 18 heures à 20° C. La viscosité atteint 340 mPa · s.
Dans un autre réacteur agité on charge:

- 10 g du même condensat
- 290,5 g d'huile polydiméthylpolysiloxanique à 0,2% d'OH et de viscosité Brookfield à 20° C de 1020 mPa · s
- 0,58 g de titanate de tétraisopropyle

Le rapport fonctionnel final $OH/OCH_3$ est de 0,9.

On laisse réagir 18 heures. La viscosité atteint 3500 mPa · s.

Examinés comme dans l'exemple 1, en présence de photoinitiateur, les 3 condensats sont réticulés en 1 seconde avec des forces de décollement au test du ruban Barnier et respectivement de 75,5, 29,2 et 30,2 g/cm.

**Revendications**

1. Procédé de durcissement de compositions organopolysiloxaniques obtenues selon un procédé qui consiste à mélanger essentiellement un polysiloxane à groupements hydroxysilylés ne comportant pas de liaison Si—H et pas de radicaux organiques à isaturation éthylénique activée, avec un composé à groupement aminopolyalkoxysilylé, caractérisé en ce que le durcissement de la composition organopolysiloxanique est effectué par exposition en cuches minces à des radiations ultra-violettes.

2. Procédé selon la revendication 1 dans lequel le polysiloxane à groupements hydroxysilylés est un $\alpha,\omega$-dihydroxypolydiorganopolysiloxane constitués de motifs ($Z_2SiO$) le symbole Z ayant l'une des significations suivantes:

— des radicaux hydrocarbonés aliphatiques ou cycloaliphatiques saturés ayant de 1 à 6 atomes de carbone et comportant éventuellement de 1 à 6 atomes de chlore et/ou de fluor,
— des radicaux alcényles ayant de 2 à 4 atomes de carbone et représentant en nombre au plus 5% de l'ensemble des radicaux hydrocarbonés portés par l'organopolysiloxane,
— des radicaux phényle, alcoylphényle ou phénylalcoyle ayant de 6 à 8 atomes de carbone et éventuellement substitués par un à 4 atomes de chlore et/ou de fluor.

3. Procédé selon la revendication 1 dans lequel le polysiloxane à groupements hydroxysilylés est constitué par un mélange contenant un $\alpha,\omega$-dihydroxypolydiorganopolysiloxane de motifs ($Z_2SiO$) et une résine organopolysiloxanique constituées de motifs en proportions quelconque $ZsiO_{3/2}$, $SiO_2$, ($Z_2SiO$), $(Z)_2(OH)SiO_{0,5}$, le symbole Z ayant la signification préalablement donnée.

4. Procédé selon l'une des revendication 1 et 2 dans lesquelles Z représente des radicaux méthyle, phényle, vinyle, éventuellement chlorés et/ou fluorés.

5. Procédé selon l'une des revendications 1 à 4 dans lesquelles le composé à groupement aminopolyalkoxysilylé à formule suivante:

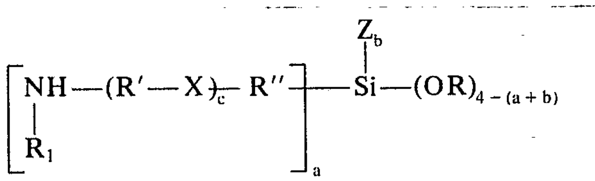

(I)

ou est constitué de motifs

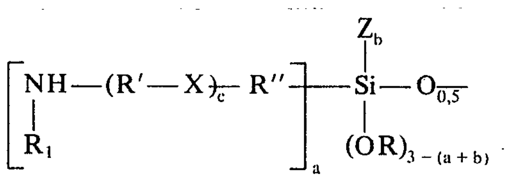

(II)

ces motifs étant éventuellement associés à des motifs $-(Z_2SiO)-$ difonctionnels.

Dans ces formules les divers symboles représentent respectivement:

— a un nombre entier égal à 1 ou 2,
— b un nombre entier égal à 0, 1, la somme (a + b) étant au plus égale à 2,
— c un nombre entier égal à 0 ou 1,
— X un atome d'oxygène ou un groupement

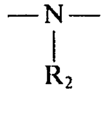

— $R_1$ un atome d'hydrogène ou un groupement alkyle ayant de 1 à 4 atomes de carbone,
— R' et R'' des radicaux divalents alkylène ayant de 1 à 6 atomes de carbone,

— $R_2$ un atome d'hydrogène ou un radical alkyle ayant de 1 à 4 atomes de carbone:
— R des radicaux alkyle ayant de 1 à 4 atomes de carbone ou des radicaux alkoxyalkyle de formule: $-R'''-O-R_3$ dans laquelle $R_3$ représente un radical alkyle ayant de 1 à 4 atomes de carbone et où R''' représente un radical alkylène ayant de 2 à 4 atomes de carbone.
— Z ayant la signification préalablement donnée.

6. Procédé selon la revendication 5 dans laquelle le composé à groupement aminopolyalkoxysilylé a pour formule (I):

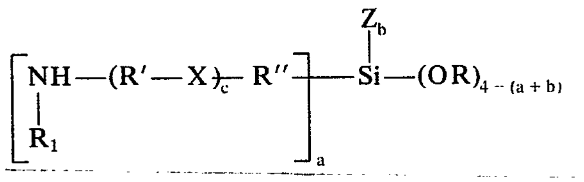
(I)

— a un nombre entier égal à 1,
— Z un radical méthyle, phényle ou vinyle, ces divers radicaux étant éventuellement chlorés ou fluorés,
— X un radical

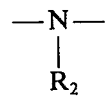

— $R_1$, $R_2$ un atome d'hydrogène,
— R' et R'' des radicaux alkylène ayant de 2 à 6 atomes de carbone,
— R''' un radical éthylène,
— R et $R_3$ des radicaux méthyle ou éthyle.

7. Procédé selon l'une des revendications précédentes dans lequel le rapport entre le nombre de groupements hydroxylés liés à un atome de silicium et le nombre de groupements alkoxy liés aux atomes de silicium est compris entre 0,1 et 1.

8. Procédé selon l'une des revendications précédentes dans lequel on avance par tout moyen connu avant photoréticulation le mélange essentiellement constitué par l'organopolysiloxane à groupements hydroxysilylé et le composé à groupements aminopolyalkoxysilylé.

9. Procédé selon l'une des revendications précédentes caractérisé en ce que la photoréticulation est effectuée à l'air dont l'humidité relative est comprise entre 20 et 80%.

10. Procédé selon l'une des revendications précédentes selon lequel on ajoute dans la composition à photoréticuler, un photosensibilisateur.

11. Procédé selon l'une des revendications précédentes selon lequel on ajoute dans la compositon à photoréticuler, un composé polyalkoxysilylé monomère ou polymère.

12. Procédé selon l'une des revendications précédentes selon lequel on ajoute dans la composition à photoréticuler, un époxypolyalkoxysilane.

**Patentansprüche**

1. Verfahren zum Härten von Organopolysiloxanzusammensetzungen, die nach einem Verfahren erhalten sind, das darin besteht, im wesentlichen ein Polysiloxan mit Hydroxysilylgruppen, die keine Si—H-Bindung tragen und keine organischen Reste mit aktivierter ethylenischer Ungesättigtheit enthalten, mit einer Verbindung mit einer Aminopolyalkoxysilylgruppierung zu vermischen, dadurch gekennzeichnet, daß das Härten der Organopolysiloxanzusammensetzung bewirkt wird, indem in dünnen Schichten ultravioletten Strahlen ausgesetzt wird.

2. Verfahren gemäß Anspruch 1, dadurch gekennzeichnet, daß das Polysiloxan mit Hydroxysilylgruppierungen ein $\alpha,\omega$-Dihydroxypolydiorganopolysiloxan ist, bestehend aus Gruppierungen ($Z_2SiO$), wobei das Symbol Z eine der folgenden Bedeutungen hat:

— aliphatische oder cycloaliphatische gesättigte Kohlenwasserstoffreste mit 1 bis 6 Kohlenstoffatomen und gegebenenfalls mit 1 bis 6 Chlor und/oder Fluoratomen,
— Alkenylreste mit 2 bis 4 Kohlenstoffatomen und darstellend eine Zahl von höchstens 5% der Gesamtheit der Kohlenwasserstoffreste, die von dem Organopolysiloxan getragen sind,
— Phenyl-, Alkylphenyl- oder Phenylalkylreste mit 6 bis 8 Kohlenstoffatomen und gegebenenfalls substituiert durch 1 bis 4 Chlor und/oder Fluoratome.

3. Verfahren gemäß Anspruch 1, dadurch gekennzeichnet, daß das Polysiloxan mit Hydroxysilylgruppierungen besteht aus einem Gemisch enthaltend ein $\alpha,\omega$-Dihydroxypolydiorganopolysiloxan mit Gruppierungen ($Z_2SiO$) und einem Organopolysiloxanharz bestehend aus Gruppierungen in beliebigen Mengenverhältnissen $ZSiO_{3/2}$, $SiO_2$, ($Z_2SiO$), $(Z)_2(OH)SiO_{0,5}$, wobei das Symbol Z die vorstehend angegebene Bedeutung besitzt.

4. Verfahren gemäß einem der Ansprüche 1 und 2, dadurch gekennzeichnet, daß Z Methyl-, Phenyl-, Vinylreste, gegebenenfalls chloriert und/oder fluoriert, bedeutet.

5. Verfahren gemäß einem der Ansprüche 1 bis 4, dadurch gekennzeichnet, daß die Verbindung mit Aminopolyalkoxysilylgruppierungen die folgende Formel hat

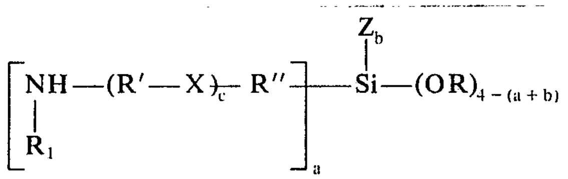

(I)

oder aus Gruppierungen

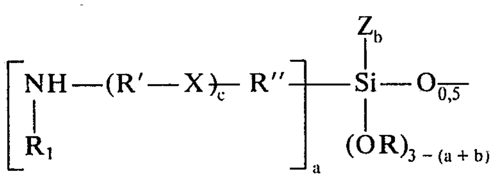

(II)

besteht, wobei diese Gruppierungen gegebenenfalls mit difunktionellen Gruppierungen $-(Z_2SiO)-$ assoziiert sind, in diesen Formeln haben die einzelnen Symbole die folgenden Bedeutungen:

— a eine ganze Zahl gleich 1 oder 2,
— b eine ganze Zahl gleich 0, 1, wobei die Summe (a + b) höchstens gleich 2 ist,
— c eine ganze Zahl gleich 0 oder 1,
— X ein Sauerstoffatom oder eine Gruppierung

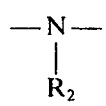

— $R_1$ ein Wasserstoffatom oder eine Alkylgruppe mit 1 bis 4 Kohlenstoffatomen,
— R′ und R″ zweiwertige Alkylenreste mit 1 bis 6 Kohlenstoffatomen,
— $R_2$ ein Wasserstoffatom oder ein Alkylrest mit 1 bis 4 Kohlenstoffatomen,
— R Alkylreste mit 1 bis 4 Kohlenstoffatomen oder Alkoxyalkylreste der Formel $-R'''-O-R_3$, worin $R_3$ einen Alkylrest mit 1 bis 4 Kohlenstoffatomen bedeutet und wo R‴ einen Alkylrest mit 2 bis 4 Kohlenstoffatomen bedeutet
— Z hat die vorstehend angegebene Bedeutung.

6. Verfahren gemäß Anspruch 5, dadurch gekennzeichnet, daß die Verbindung mit Aminopolyalkoxysilylgruppierungen die Formel (I)

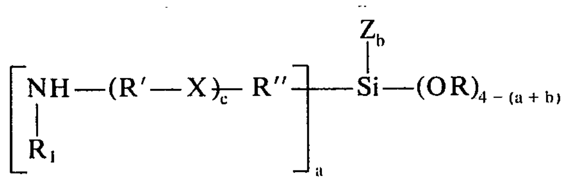

(I)

besitzt, worin bedeuten:

— a eine ganze Zahl gleich 1,
— Z einen Methyl-, Phenyl- oder Vinylrest, wobei diese verschiedenen Reste gegebenenfalls chloriert oder fluoriert sind,

— X einen Rest

$$-\underset{\displaystyle R_2}{\underset{|}{N}}-$$

— $R_1$, $R_2$ ein Wasserstoffatom,
— R′ und R″ Alkylenreste mit 2 bis 6 Kohlenstoffatomen,
— R‴ einen Ethylenrest,
— R und $R_3$ Methyl- oder Ethylreste.

7. Verfahren gemäß einem der vorhergehenden Ansprüche, dadurch gekennzeichnet, daß das Verhältnis zwischen der Zahl der Hydroxylgruppen gebunden an ein Siliciumatom und der Zahl der Alkoxygruppen gebunden an Siliciumatome zwischen 0,1 und 1 liegt.

8. Verfahren gemäß einem der vorhergehenden Ansprüche, dadurch gekennzeichnet, daß man vor der Photovernetzung durch jedes bekannte Mittel das im wesentlichen aus Organopolysiloxan mit Hydroxysilylgruppierungen und der Verbindung mit Aminopolyalkoxysilylgruppierungen bestehende Gemisch vorantreibt.

9. Verfahren gemäß einem der vorhergehenden Ansprüche, dadurch gekennzeichnet, daß die Photovernetzung an der Luft, deren relative Feuchtigkeit zwischen 20 und 80% liegt, bewirkt wird.

10. Verfahren gemäß einem der vorhergehenden Ansprüche, dadurch gekennzeichnet, daß man der zu photovernetzenden Zusammensetzung einen Photosensibilisator zusetzt.

11. Verfahren gemäß einem der vorhergehenden Ansprüche, dadurch gekennzeichnet, daß man in die zu photovernetzende Zusammensetzung eine monomere oder polymere Polyalkoxysilylverbindung einbringt.

12. Verfahren gemäß einem der vorhergehenden Ansprüche, dadurch gekennzeichnet, daß man der zu photovernetzenden Verbindung ein Epoxypolyalkoxysilan zusetzt.

**Claims**

1. Process for hardening organopolysiloxane compositions produced by a process which consists in mixing principally a polysiloxane having hydroxysilyl groups, and not containing an Si—H bond or organic radicals having acitivated ethylenic unsaturation, with a compound having an amino polyalkoxysilyl group, characterised in that the hardening of the organopolysiloxane composition is performed by exposing thin layers of it to ultraviolet radiation.

2. Process according to Claim 1, in which the polysiloxane having hydroxysilyl groups is an $\alpha,\omega$-dihydroxypolydiorganopolysiloxane consisting of ($Z_2SiO$) units, the symbol Z having of the following significances:

— saturated aliphatic or cycloaliphatic hydrocarbon radicals having 1 to 6 carbon atoms and optionally containing 1 to 6 chlorine and/or fluorine atoms,
— alkenyl radicals having 2 to 4 carbon atoms and representing, in number, at most 5% of all the hydrocarbon radicals borne by the organopolysiloxane,
— phenyl, alkyl phenyl or phenyl alkyl radicals having 6 to 8 carbon atoms and optionally substituted with 1 to 4 chlorine and/or fluorine atoms.

3. Process according to Claim 1, in which the polysiloxane having hydroxysilyl groups consists of a mixture containing an $\alpha,\omega$-dihydroxypolydiorganopolysiloxane of ($Z_2SiO$) units and an organopolysiloxane resin consisting of $ZSiO_{3/2}$, $SiO_2$, ($Z_2SiO$), $(Z)_2(OH)SiO_{0.5}$ units in any proportions, the symbol Z having the significance given previously.

4. Process according to one of Claims 1 and 2, in which Z denotes methyl, phenyl or vinyl radicals, optionally chlorinated and/or fluorinated.

5. Process according to one of Claims 1 to 4, in which the compound having an aminopolyalkoxysilyl group has the following formula:

$$\left[\underset{\displaystyle R_1}{\underset{|}{NH}}-(R'-X)_c-R''\right]_a-\overset{\displaystyle Z_b}{\overset{|}{Si}}-(OR)_{4-(a+b)} \qquad (I)$$

or consists of units

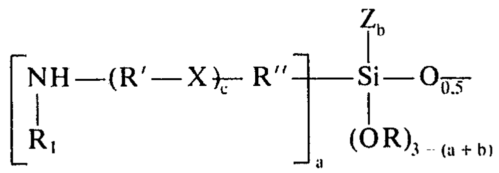

(II)

these units optionally being combined with difunctional $-(Z_2SiO)-$ units.

In these formulae, the various symbols denote respectively:

- a — an integer equal to 1 or 2,
- b — an integer equal to 0 or 1, the sum (a + b)being equal at most to 2,
- c — an integer equal to 0 or 1,
- X — an oxygen atom or a

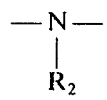

- $R_1$ — a hydrogen atom or an alkyl group having 1 to 4 carbon atoms,
- R′ and R″ — divalent alkylene radicals having 1 to 6 carbon atoms,
- $R_2$ — a hydrogen atom or an alkyl radical having 1 to 4 carbon atoms,
- R — alkyl radicals having 1 to 4 carbon atoms or alkoxy alkyl radicals of formula $-R'''-O-R_3$, in which $R_3$ denotes an alkyl radical having 1 to 4 carbon atoms and R‴ denotes an alkylene radical having 2 to 4 carbon atoms,
- Z — having the significance given previously.

6. Process according to Claim 5, in which the compound having an aminopolyalkoxysilyl group has the formula (I):

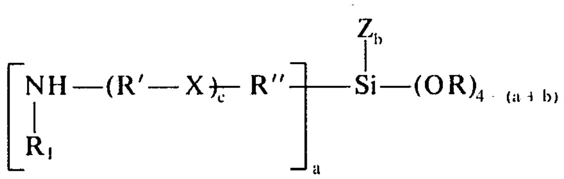

(I)

- a — an integer equal to 1,
- Z — a methyl, phenyl or vinyl radical, these various radicals optionally being chlorinated or fluorinated,
- X — a

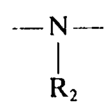

radical

- $R_1$, $R_2$ — a hydrogen atom,
- R′ and R″ — alkylene radicals having 2 to 6 carbon atoms,
- R‴ — an ethylene radical,
- R and $R_3$ — methyl or ethyl radicals.

7. Process according to one of the preceding Claims in which the ratio of the number of hydroxyl groups bound to a silicon atom to the number of alkoxy groups bound to silicon atoms is between 0,1 and 1.

8. Process according to one of the preceding Claims, in which the mixture consisting principally of the organopolysiloxane having hydroxysilyl groups and the compound having aminopolyalkoxysilyl groups is advanced by any known means befor photo-crosslinking.

9. Process according to one of the preceding Claims, characterised in that the photo-crosslinking is performed in air, the relative humidity of which is between 20 and 80%.

10. Process according to one of the preceding Claims, whereby a photosensitiser is added to the

composition to be photo-crosslinked.

11. Process according to one of the preceding Claims, whereby a monomeric or polymeric polyalkoxysilyl compound is added to the composition to be photo-crosslinked.

12. Process according to one of the preceding Claims, whereby an epoxypolyalkoxysilane is added to the composition to be photo-crosslinked.